# EUROPÄISCHE PATENTSCHRIFT

(11) **EP 3 181 634 B1**
(45) Veröffentlichungstag und Bekanntmachung des Hinweises auf die Patenterteilung: **12.02.2020**
(21) Anmeldenummer: 16199721.8
(22) Anmeldetag: 21.11.2016
(51) Int. Cl.: C08L 21/00, C08J 3/00

(54) **VERFAHREN ZUR HERSTELLUNG EINER KAUTSCHUKMISCHUNG**
METHOD FOR PRODUCING A RUBBER MIXTURE
PROCÉDÉ DE FABRICATION D'UN MÉLANGE DE CAOUTCHOUC

(30) Priorität: 18.12.2015 DE 102015225985
(43) Veröffentlichungstag der Anmeldung: 21.06.2017
(73) Patentinhaber: Continental Reifen Deutschland GmbH, 30165 Hannover (DE)
(72) Erfinder: Schramm, Oliver, 31177 Harsum (DE); Naik, Shreyas, 30173 Hannover (DE); Müller, Matthias-Stephan, 30827 Garbsen (DE); Hallmann, Steffen, 30171 Hannover (DE); Minx, Carsten, 31535 Neustadt (DE)
(74) Vertreter: Finger, Karsten

(56) Entgegenhaltungen:
- EP-A1- 2 517 899
- WO-A1-03/009989
- WO-A1-03/090876
- US-A- 4 417 005

## Beschreibung

Die Erfindung betrifft ein Verfahren zur Herstellung einer Kautschukbestandteile, Öle, Füllstoffe in Form von Ruß und/oder Silica und Additive enthaltenden Kautschukmischung, deren Bestandteile in einer gemeinsamen Mischvorrichtung gemischt werden und die zur anschließenden Formgebung durch eine Düse geeignet ist.

Derartige Kautschukmischungen werden insbesondere zur Herstellung von Fahrzeugreifen verwendet. Es ist bekannt, alle Bestandteile der Kautschukmischung, also Polymere, Füllstoffe, Öle und Additive als Masterbatch herzustellen und in die gemeinsame Mischvorrichtung einzubringen. Dabei soll erreicht werden, dass insbesondere die Füllstoffe gleichmäßig und fein in der sich bildenden Kautschukmatrix verteilt werden. Hiervon hängt die Qualität des nach der Vulkanisation des Kautschuks entstehenden Gummierzeugnisses, insbesondere eines Reifens, ab.

Die EP 2 517 899 A1 offenbart ein zweistufiges Mischverfahren, bei dem in der ersten Mischstufe der gesamte Kautschukanteil mit Füllstoffen vermischt wird. In einer letzten Mischstufe werden dann Vulkanisations-/Kautschukadditive zugegeben.

Die WO 03/009989 A1 beschreibt ein Verfahren zur Zugabe von untergeordneten Inhaltsstoffen, die in nur geringen Mengen dem Kautschuk zugegeben werden sollen. Hierzu gehören nicht verstärkende Füllstoffe. Zur besseren Verteilung der geringen Mengen werden die untergeordneten Inhaltsstoffe als Dispersion in einem thermoplastischen Bindemittel zugegeben.

Die US 4 417 005 offenbart ein Mischverfahren, bei dem in einer ersten Stufe einem Teil des Kautschuks Ruß zugegeben wird. In einer späteren Mischstufe wird ein zweiter Teil des Kautschuks der bereits erfolgten Mischung zugegeben. Die erste Teilmenge des Kautschuks soll dabei eine Mooney-Viskosität von wenigstens 53 Mooney-Einheiten aufweisen.

Durch die WO 03/090876 A1 ist die Herstellung einer Kautschukmischung bekannt, die für die Herstellung von Golfbällen geeignet ist. Um Prozessadditive in die Mischung einzubringen, werden geeignete Dispersionsmittel verwendet, und ein zweistufiges Mischverfahren eingesetzt. Für die Mischstufe wird mit dem Kautschuk und den Prozessadditiven ein Masterbatch hergestellt, mit dem der Mischvorgang eingeleitet wird.

Insbesondere für hochdifferenzierte Kautschukmischungen, die eine Vielzahl von Additiven enthalten, hat es sich herausgestellt, dass die Verteilung der Füllstoffe häufig nicht in der gewünschten homogenen Weise erfolgt.

Die vorliegende Erfindung geht daher von der Problemstellung aus, die Verteilung der Füllstoffe in dem aus der Kautschukmischung entstehenden Gummierzeugnis zu verbessern.

Ausgehend von dieser Problemstellung wird bei einem Verfahren der eingangs erwähnten Art erfindungsgemäß vorgesehen, dass mit einem ersten Anteil der Kautschukbestandteile eine Viskosität zwischen 5 und 30 Mooney-Einheiten eingestellt wird und damit mit wenigstens den Füllstoffen eine Vormischung als erster Mischpartner hergestellt wird, dass ein zweiter Anteil der Kautschukbestandteile mit einer Viskosität zwischen 40 und 90 Mooney-Einheiten eingestellt, optional mit Ölen und/oder Additiven versetzt wird und einen zweiten Mischpartner bildet
und dass die beiden Mischpartner in der Mischvorrichtung zu der Kautschukmischung vermischt werden.
Die Viskosität ist im Rahmen der vorliegenden Erfindung die Mooney-Viskosität gemäß ASTM D1646, ML1+3 bei 100 °C in Mooney-Einheiten M.E.

Die Erfindung beruht somit darauf, die Kautschukmischung so auszubilden, dass ein flüssiger Kautschukbestandteil für die Vormischung verwendet wird und die Vormischung dann in eine eher zähe Kautschukmasse eingemischt wird. In den flüssigen Anteil können die Füllstoffe gleichmäßig dispergiert werden, sodass die Vormischung bereits eine gleichmäßige Verteilung der Füllstoffe in dem Anteil der Kautschukbestandteile aufweist. Dieser Anteil wird dann in den zähen zweiten Anteil der Kautschukbestandteile in der gemeinsamen Mischvorrichtung eingemischt. Dabei können dem zweiten Mischpartner Öle und/oder Additive beigegeben sein oder auch während des Mischens in der Mischvorrichtung beigegeben werden. Die Mischung der beiden Kautschukbestandteile als erster und zweiter Mischpartner lässt sich mit einer sehr gleichmäßigen Verteilung durchführen, weil die Vermischung von gleichen oder ähnlichen, durch die Kautschukbestandteile gebildeten Ausgangsstoffen sehr homogen möglich ist.

Aufgrund der Zugabe der Füllstoffe in die eher flüssige Phase des ersten Anteils der Kautschukbestandteile ermöglicht eine Dispersion der Füllstoffe in der Flüssigkeit in einem Dispersionsrührer, der darüber hinaus ggf. agglomerierte Füllstoffe auch noch zerkleinern kann.

Der erste Anteil der Kautschukbestandteile beträgt maximal 20 phr bezogen auf die Gesamt-Kautschukmenge. Für diesen Anteil der Kautschukbestandteile eignen sich alle Kautschuke, die in eher flüssiger Form vorliegen können, wie beispielsweise flüssiger Butadien-Kautschuk.

Der zweite Anteil der Kautschukbestandteile wird vorzugsweise durch Styrol-Butadien-Kautschuk (ESBR) und/oder natürlichen und/oder synthetischen Isopren-Kautschuk (IR) gebildet.

Es ist durch die Erfindung nicht ausgeschlossen, dass auch eine Vermischung mit einem dritten Anteil von Kautschukbestandteilen vorgenommen wird. Bevorzugt ist jedoch, dass der erste Anteil und der zweite Anteil der Kautschukbestandteile die Gesamtkautschukmenge ausmachen.

Die Mischung der beiden erfindungsgemäßen Mischpartner kann noch dadurch unterstützt werden, dass in wenigstens einen der Mischpartner überkritisches CO₂ eingeleitet wird, das die Mischbarkeit der beiden Mischpartner wesentlich unterstützt. Die Zugabe des überkritischen CO₂ kann dabei in die Vormischung als ersten Mischpartner, in den zähflüssigen zweiten Mischpartner oder auch am Beginn der gemeinsamen Mischvorrichtung erfolgen. Dabei muss dafür gesorgt werden, dass der überkritische Zustand des CO₂ für eine gewisse Zeit erhalten bleibt, also ein Druck in dem betreffenden Behälter von > 35 bar bei einer Temperatur von ≥ 60°C aufrechterhalten wird. Das überkritische CO₂ sorgt für eine Aufweitung des Molekülabstands und ermöglicht damit die Einlagerung anderer Moleküle, wodurch die Vermischbarkeit der Materialien unterstützt wird.

Das erfindungsgemäße Verfahren lässt sich auch mit rezykliertem Gummi durchführen, wenn dieses in feiner Verteilung den Kautschukbestandteilen zugemischt wird. Das rezyklierte Gummi kann dabei in feiner Verteilung als Füllstoff wirken. In einer bevorzugten Ausführungsform wird das rezyklierte, zerkleinerte Gummi jedoch mit überkritischem CO₂ devulkanisiert und steht somit in Kautschukform für die Herstellung der Kautschukmischung zur Verfügung. Dabei kann das rezyklierte Gummi auch mit einer flüssigen Phase vorliegen, die für die erfindungsgemäße Vormischung geeignet ist.

Der Anteil der Kautschukbestandteile in dem die erfindungsgemäße Vormischung bildenden ersten Mischpartner beträgt maximal 20 phr, bezogen auf die Gesamtkautschukmenge. Bevorzugt beträgt der Anteil ≤ 20 phr, weiter bevorzugt ≤ 10 phr.
Die in dieser Schrift verwendete Angabe phr (parts per hundred parts of rubber by weight) ist dabei die in der Kautschukindustrie übliche Mengenangabe für Mischungsrezepturen.

Die erfindungsgemäß verwendeten Füllstoffe sind Ruß und/oder Silica. Insbesondere der zur Agglomeration neigende Ruß lässt sich durch die erfindungsgemäße Dispersion, beispielsweise mittels eines Dispersionsrührers, in feiner und gleichmäßiger Form in der Kautschukflüssigkeit verteilen.

Die Viskosität des ersten Anteils der Kautschukbestandteile liegt erfindungsgemäß zwischen 5 und 30 Mooney-Einheiten, bevorzugt zwischen 10 und 25 Mooney-Einheiten. Hiervon unterscheidet sich die Viskosität des zweiten Anteils der Kautschukbestandteile, die den zweiten Mischpartner bildet und zwischen 40 und 90 Mooney-Einheiten liegt, vorzugsweise zwischen 50 und 80 Mooney-Einheiten.

Obwohl es mit der Herstellung der erfindungsgemäßen Vormischung im Wesentlichen darauf ankommt, die Füllstoffe in der Kautschukphase gleichmäßig zu verteilen, kann die Vormischung auch bereits andere Öle und Additive beinhalten, ohne dass die erfindungsgemäße Funktion der Vormischung beeinträchtigt würde. Der zweite Mischpartner kann aus dem zweiten Anteil der Kautschukbestandteile allein oder versetzt mit Ölen und/oder Additiven gebildet sein. Die in Frage kommenden Öle und Additive sind aus der Kautschukmischtechnik, insbesondere für Fahrzeugreifen, hinlänglich bekannt und dienen ebenso bekannten Funktionen, wie Weichmachen, Vulkanisationsbeschleunigung, Vulkanisationsverzögerung, Alterungsschutz, Haftverbesserung o. ä.

Das erfindungsgemäße Verfahren erlaubt eine weitere Verarbeitung der Kautschukmischung in bekannten Verfahren, also diskontinuierlich mit einer Mischung in einem Innenmischer als auch kontinuierlich in einem kontinuierlichen Extruder. Die Formgebung, beispielsweise zur Herstellung eines Kautschukstreifens, erfolgt regelmäßig, indem die Mischung durch eine Düse gedrückt wird. Der so hergestellte Streifen kann als solcher, oder nach oder während einer weiteren Formgebung vulkanisiert werden.

## Patentansprüche

1. Verfahren zur Herstellung einer Kautschukbestandteile, Öle, Füllstoffe in Form von Ruß und/oder Silica und Additive enthaltenden Kautschukmischung, deren Bestandteile in einer gemeinsamen Mischvorrichtung gemischt werden und die zur anschließenden Formgebung durch eine Düse geeignet ist, **dadurch gekennzeichnet, dass** mit einem ersten Anteil der Kautschukbestandteile eine Viskosität zwischen 5 und 30 Mooney-Einheiten eingestellt wird und damit mit wenigstens den Füllstoffen eine Vormischung als erster Mischpartner hergestellt wird,
dass ein zweiter Anteil der Kautschukbestandteile mit einer Viskosität zwischen 40 und 90 Mooney-Einheiten eingestellt, optional mit Ölen und/oder Additiven versetzt wird und einen zweiten Mischpartner bildet
und dass die beiden Mischpartner in der Mischvorrichtung zu der Kautschukmischung vermischt werden, wobei der erste Anteil der Kautschukbestandteile maximal 20 phr bezogen auf die Gesamtkautschukmenge ausmacht.

2. Verfahren nach Anspruch 1, **dadurch gekennzeichnet, dass** der erste Anteil der Kautschukbestandteile durch Butadien-Kautschuk (BR) gebildet wird.

3. Verfahren nach einem der Ansprüche 1 oder 2, **dadurch gekennzeichnet, dass** der zweite Anteil der Kautschukbestandteile Styrol-Butadien-Kautschuk (SBR) und/oder Isopren-Kautschuk (IR) enthält.

4. Verfahren nach einem der Ansprüche 1 bis 3, **dadurch gekennzeichnet, dass** der erste Anteil und der zweite Anteil der Kautschukbestandteile die Gesamtkautschukmenge ausmachen.

5. Verfahren nach einem der Ansprüche 1 bis 4, **dadurch gekennzeichnet, dass** die Vormischung in einem separaten Vormischer, beispielweise in einem Dispersionsrührer, hergestellt wird.

6. Verfahren nach einem der Ansprüche 1 bis 5, **dadurch gekennzeichnet, dass** in die Vormischung vor dem Eintritt in die Mischvorrichtung überkritisches CO₂ eingeleitet wird.

7. Verfahren nach einem der Ansprüche 1 bis 6, **dadurch gekennzeichnet, dass** in den zweiten Mischpartner überkritisches CO₂ eingeleitet wird.

8. Verfahren nach einem der Ansprüche 1 bis 7, **dadurch gekennzeichnet, dass** am Beginn der gemeinsamen Mischvorrichtung überkritisches CO₂ eingeleitet wird.

9. Verfahren nach einem der Ansprüche 1 bis 8, **dadurch gekennzeichnet, dass** für die Kautschukmischung Anteile von rezykliertem Gummi verwendet werden, die mit überkritischem CO₂ behandelt werden.

## Claims

1. Process for producing a rubber mixture containing rubber constituents, oils, fillers in the form of carbon black and/or silica and additives, the constituents of which are mixed in a common mixing apparatus and which is suitable for subsequent shaping by a die, **characterized in that** with a first fraction of the rubber constituents a viscosity between 5 and 30 Mooney units is established and said fraction is used to produce, with at least the fillers, a premixture as a first mixing partner,
**in that** a second fraction of the rubber constituents is adjusted to a viscosity between 40 and 90 Mooney units, optionally admixed with oils and/or additives and forms a second mixing partner
and **in that** the two mixing partners are mixed to afford the rubber mixture in the mixing apparatus, wherein the first fraction of the rubber constituents accounts for not more than 20 phr based on the total rubber amount.

2. Process according to Claim 1, **characterized in that** the first fraction of the rubber constituents is formed by butadiene rubber (BR).

3. Process according to either of Claims 1 and 2, **characterized in that** the second fraction of the rubber constituents contains styrene-butadiene rubber (SBR) and/or isoprene rubber (IR).

4. Process according to any of Claims 1 to 3, **characterized in that** the first fraction and the second fraction of the rubber constituents account for the total rubber amount.

5. Process according to any of Claims 1 to 4, **characterized in that** the premixture is produced in a separate premixer, for example in a dispersion stirrer.

6. Process according to any of Claims 1 to 5, **characterized in that** supercritical CO₂ is introduced into the premixture before entry into the mixing apparatus.

7. Process according to any of Claims 1 to 6, **characterized in that** supercritical CO₂ is introduced into the second mixing partner.

8. Process according to any of Claims 1 to 7, **characterized in that** supercritical CO₂ is introduced at the beginning of the common mixing apparatus.

9. Process according to any of Claims 1 to 8, **characterized in that** fractions of recycled rubber that are treated with supercritical CO₂ are used for the rubber mixture.

## Revendications

1. Procédé de fabrication d'un mélange de caoutchouc contenant des constituants caoutchouteux, des huiles, des charges sous la forme de noir de carbone et/ou de silice et des additifs, dont les constituants sont mélangés dans un dispositif de mélange commun et qui est approprié pour le façonnage ultérieur par une buse, **caractérisé en ce qu'**une viscosité comprise entre 5 et 30 unités Mooney est ajustée avec une première partie des constituants caoutchouteux, et un pré-mélange est fabriqué avec celle-ci avec au moins les charges en tant que premier partenaire de mélange,
**en ce qu'**une deuxième partie des constituants caoutchouteux est ajustée à une viscosité comprise entre 40 et 90 unités Mooney, éventuellement mélangée avec des huiles et/ou des additifs, et forme un deuxième partenaire de mélange,
et **en ce que** les deux partenaires de mélange sont mélangés dans le dispositif de mélange pour former le mélange de caoutchouc, la première partie des constituants caoutchouteux représentant au plus 20 pce par rapport à la quantité totale du caoutchouc.

2. Procédé selon la revendication 1, **caractérisé en ce que** la première partie des constituants caoutchouteux est formée par un caoutchouc de butadiène (BR) .

3. Procédé selon l'une quelconque des revendications 1 ou 2, **caractérisé en ce que** la deuxième partie des constituants caoutchouteux contient du caoutchouc de styrène-butadiène (SBR) et/ou du caoutchouc d'isoprène (IR) .

4. Procédé selon l'une quelconque des revendications 1 à 3, **caractérisé en ce que** la première partie et la deuxième partie des constituants caoutchouteux représentent la quantité totale du caoutchouc.

5. Procédé selon l'une quelconque des revendications 1 à 4, **caractérisé en ce que** le pré-mélange est fabriqué dans un pré-mélangeur séparé, par exemple dans un agitateur à dispersion.

6. Procédé selon l'une quelconque des revendications 1 à 5, **caractérisé en ce que** du CO₂ supercritique est introduit dans le pré-mélange avant l'entrée dans le dispositif de mélange.

7. Procédé selon l'une quelconque des revendications 1 à 6, **caractérisé en ce que** du CO₂ supercritique est introduit dans le deuxième partenaire de mélange.

8. Procédé selon l'une quelconque des revendications 1 à 7, **caractérisé en ce que** du CO₂ supercritique est introduit au début dans le dispositif de mélange commun.

9. Procédé selon l'une quelconque des revendications 1 à 8, **caractérisé en ce que** des fractions de caoutchouc recyclé qui sont traitées avec du CO₂ supercritique sont utilisées pour le mélange de caoutchouc.
